# EUROPEAN PATENT APPLICATION

(11) **EP 4 636 674 A1**
(43) Date of publication of application: **22.10.2025**
(21) Application number: 25150562.4
(22) Date of filing: 07.01.2025
(51) Int. Cl.: G06Q 30/0283, G06Q 20/20, G06Q 30/0601

(54) **SYSTEM, STORE SERVER, AND STORAGE MEDIUM**

(30) Priority: 17.04.2024 JP 2024066597
(71) Applicant: Toshiba TEC Kabushiki Kaisha, Tokyo 141-8562 (JP)
(72) Inventor: Nagata, Hiroto, Tokyo, 141-8562 (JP)
(74) Representative: Bandpay & Greuter

(57) **Abstract**

A system for setting and displaying a selling price of an item, includes a server that stores item information; and a terminal including: a camera, a display, a communication controller, and a processor configured to: capture an image, display the image, and transmit the image to the server, and upon receipt of a selling price of an item from the server, control the display to display the price over the image. The store server is configured to, upon receipt of an image from the terminal: execute image recognition on the image and identify an item, input the image to a machine-learning model trained to recognize a discoloration state or a deformation state of the item in the image, set a selling price for the item based on the discoloration state or the deformation state, and transmit the price to the terminal.

## Description

### FIELD

Embodiments described herein relate generally to a system, a store server, and a storage medium.

### BACKGROUND

In a conventional information processing system, it is possible to acquire a code of an item and its expiration date or best-before date from a barcode captured by a camera of a portable terminal, and set a selling price of the item displayed on the portable terminal in accordance with the acquired expiration date.

### SUMMARY OF THE INVENTION

Embodiments of the present disclosure provide a system, a store server, and a storage medium capable of automatically setting a selling price of an item depending on a condition of the item, e.g., discoloration of an item such as fresh foods due to aging or deformation of an item due to a production problem, and displaying the selling price of the item over an image thereof captured by a portable terminal.

To this end, there is provided a system for setting and displaying a selling price of an item sold at a store according to claim 1.

The system for setting and displaying a selling price of an item sold at a store, comprises a store server that stores item information about an item; and a portable terminal connectable to the store server and including: a camera, a display, a communication controller, and a processor configured to: control the camera to capture an image, control the display to display the captured image, and control the communication controller to transmit the captured image to the store server, and upon receipt of a selling price of an item from the store server, control the display to display the selling price over the captured image. The store server is configured to, upon receipt of an image from the portable terminal: execute image recognition on the received image and identify an item shown in the image, input the image to a machine-learning model that has been trained to recognize a discoloration state or a deformation state of the item shown in the image, set a selling price for the identified item based on the discoloration state or the deformation state of the item, and transmit the selling price to the portable terminal.

Preferred embodiments are set out in the dependent claims.

There is also provided a store server for the above system according to claim 10. There is further provided a non-transitory computer readable medium storing a program causing a computer to execute a method for setting and displaying a selling price of an item sold at a store on a portable terminal, according to claim 14. Preferred embodiments are set out in the dependent claims.

### BRIEF DESCRIPTION OF THE DRAWINGS

FIG. 1 is a diagram illustrating an outline configuration of a selling price display system according to an embodiment.
FIG. 2 is a diagram illustrating an outline configuration of a shopping cart to which a portable terminal is attached in the selling price display system.
FIG. 3 is a hardware block diagram illustrating a hardware configuration of a store server included in the selling price display system.
FIG. 4 is a diagram illustrating a data structure of an item master stored in the store server.
FIG. 5 is a diagram illustrating a configuration of an item recognition model stored in the store server.
FIG. 6 is a diagram illustrating a configuration of a deformation/discoloration determination model stored in the store server.
FIG. 7 is a diagram illustrating a data structure of a sales file stored in the store server.
FIG. 8 is a hardware block diagram illustrating a hardware configuration of a portable terminal included in the selling price display system.
FIG. 9 is a diagram illustrating a state in which an image of an item is captured by the portable terminal.
FIG. 10 is a diagram illustrating a first example in which a price of a captured item is displayed on the portable terminal.
FIG. 11 is a diagram illustrating a second example in which a price of a captured item is displayed on the portable terminal.
FIG. 12 is a diagram illustrating a third example in which a price of a captured item is displayed on the portable terminal.
FIG. 13 is a diagram illustrating a fourth example in which a price of a captured item is displayed on the portable terminal.
FIG. 14 is a functional block diagram illustrating a functional configuration of the selling price display system.
FIG. 15 is a flowchart of a process performed by the selling price display system.
FIG. 16 is a flowchart of a discount amount calculation process.

### DETAILED DESCRIPTION

### (Outline Configuration of Selling Price Display System)

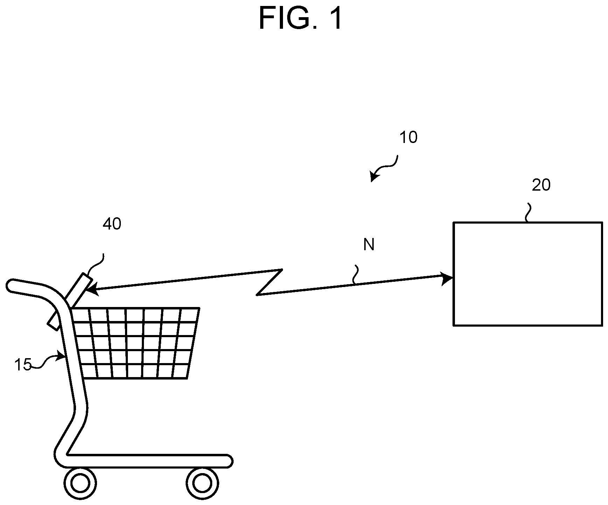

A selling price display system 10 according to an embodiment will be described with reference to FIG. 1. FIG. 1 is a diagram showing an example of a schematic configuration of the selling price display system 10.

As illustrated in FIG. 1, the selling price display system 10 has a configuration in which a store server 20 and a portable terminal 40 are connected by a communication network N such as a wireless LAN.

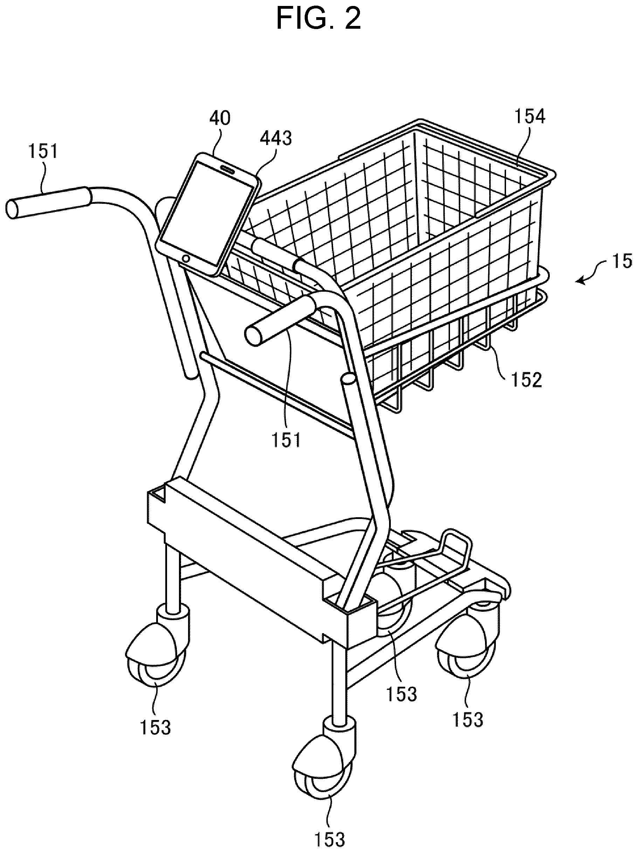

The store server 20 acquires an image captured by a camera 443 (see FIG. 2) included in the portable terminal 40, and identifies an item shown in the image. Further, the store server 20 determines a selling price of the identified item. Then, the store server 20 outputs the determined selling price to the portable terminal 40. The store server 20 is also referred to as an information processing apparatus in the present disclosure.

The portable terminal 40 includes the camera 443 (see FIG. 2) and captures an image of an item that a customer desires to purchase. Further, the portable terminal 40 outputs an image of the photographed item to the store server 20. Then, the portable terminal 40 acquires the selling price of the item from the store server 20, and displays the selling price of the item on a display device 441 (see FIG. 2) of the portable terminal 40 by being superimposed on the image of the item. The portable terminal 40 is, for example, a smartphone, a tablet terminal, or the like.

When a customer shops at a store such as a retail store, an image of an item desired to be purchased is captured by the camera 443 of the portable terminal 40 owned by the customer or loaned thereto, and the selling price of the item is superimposed on the image of the item displayed on the portable terminal 443.

Additionally, the selling price display system 10 presents the selling price based on the type of the captured item and the remaining time until the closing time of the store to the customer. That is, the selling price presenting system 10 presents a selling price to which a higher discount amount is applied as the remaining time until the closing time of the store is smaller for an item that is desired to be sold during the day, such as a delicatessen item.

In addition, the selling price display system 10 calculates a selling price based on discoloration or deformation of the captured item, and presents the calculated selling price to the customer. Specifically, the selling price display system 10 presents a selling price to which a discolored fresh food, an item with a damaged package, or the like, a discount amount corresponding to a degree of discoloration or a degree of deformation is applied.

### (Schematic Configuration of Portable Terminal)

The portable terminal 40 included in the selling price display system 10 will be described with reference to FIG. 2. FIG. 2 is a diagram illustrating an example of a schematic configuration of a shopping cart 15 on which the portable terminal 40 included in the selling price display system 10 is disposed.

The shopping cart 15 includes a pair of handles 151, a basket placing unit 152, and a plurality of casters 153 such that a basket 154 can be placed on the basket placing unit 152.

The handle 151 is a part for the customer to grasp and move the shopping cart 15. The basket placing unit 152 is a table on which the basket 154 for storing items is placed. Four casters 153, for example, are provided on the legs of the shopping cart 15. Each caster 153 is rotated individually, so that the shopping cart 15 can be moved freely in the store by being pushed by the customer.

Further, the portable terminal 40 is installed on the shopping cart 15. The portable terminal 40 is detachably installed, for example, on a connection member that connects the pair of handles 151 via an attachment member (not shown). The portable terminal 40 is, for example, a smartphone or a tablet terminal.

The portable terminal 40 performs an item registration process of registering an item that the customer desires to purchase, and a cashless payment process of paying a price for the registered item, by the customer himself/herself. Note that the portable terminal 40 may be configured to perform only the item registration process, and the payment process may be performed by a non-illustrated payment device provided in the store. For example, when a customer wishes to make a cash payment, the payment is made by the payment device.

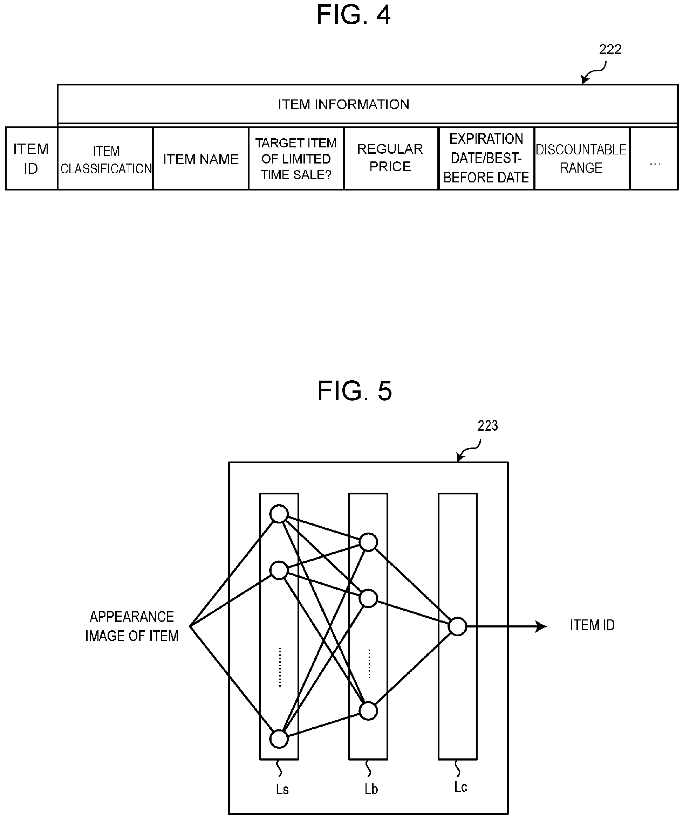

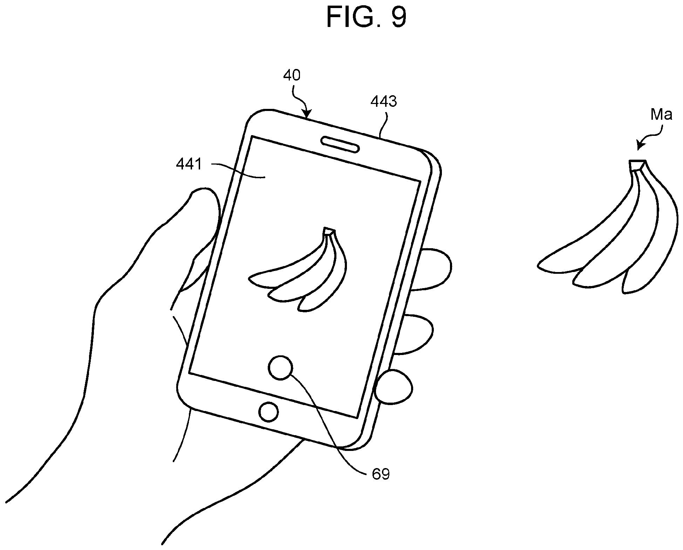

The customer photographs an item desired to be purchased by the camera 443 installed on the rear surface of the portable terminal 40. The portable terminal 40 outputs the captured image to the store server 20. The store server 20 identifies the item in the acquired image by performing image recognition. Then, the store server 20 compares the item code (e.g., the item ID) of the specified item with an item master 222 (see FIG. 4) to read out the item price. Thereafter, the store server 20 outputs the read price to the portable terminal 40. The portable terminal 40 displays the price of the item acquired from the store server 20 by superimposing the price on the image of the item captured by the customer, which is displayed on the portable terminal 40. The customer confirms the displayed price and, when the customer decides to purchase the item, the customer operates the portable terminal 40 to register the item. A more detailed flow of the item registration will be described later (see FIGS. 9 to 13).

When calculating the price of the item, the store server 20 determines the discoloration degree of the item and the degree of the deformation of the item from the image of the item acquired from the portable terminal 40. Further, the store server 20 determines whether the current time corresponds to the time slot of the limited time service and whether the target item is the corresponding item of the limited time service. Then, the store server 20 determines a discount amount based on whether the item is the target item of limited time service, whether the item is discolored, or whether the item is not deformed, and calculates a selling price to which the discount amount is applied.

The customer operates the portable terminal 40 after the registration of all the items desired to be purchased is completed, thereby causing the selection of the payment method and the payment process to be performed.

### (Hardware Configuration of Store Server)

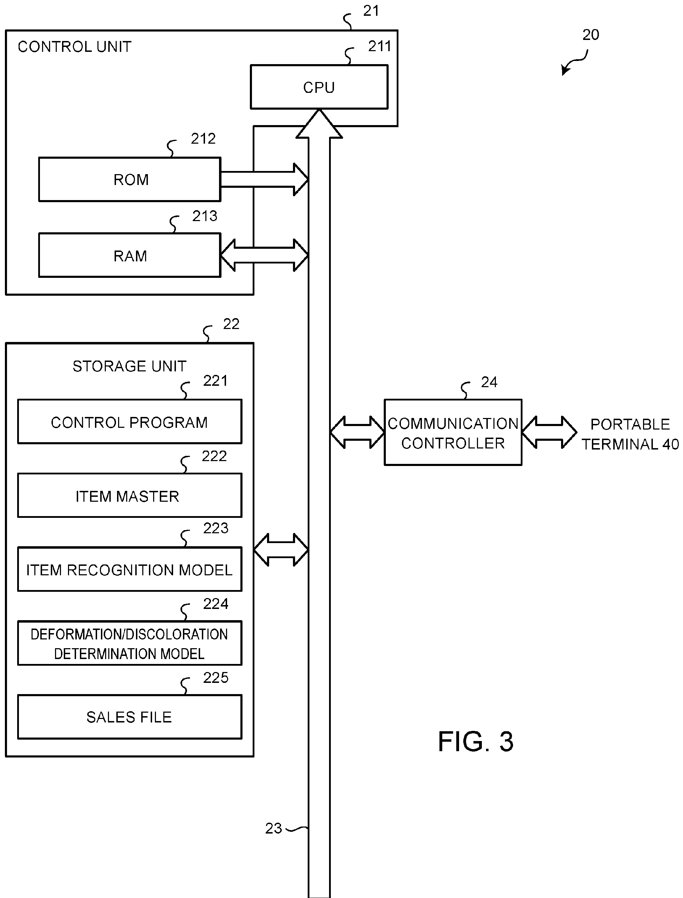

A hardware configuration of the store server 20 will be described with reference to FIG. 3. FIG. 3 is a hardware block diagram illustrating an example of a hardware configuration of the store server 20 included in the selling price display system 10.

The store server 20 has a configuration in which a control unit 21, a storage unit 22, and a communication controller 24 are connected to each other by an internal bus 23.

The control unit 21 controls the overall operation of the store server 20. The control unit 21 includes a processor such as a CPU (central processing unit) 211, a ROM (read only memory) 212, and a RAM (random access memory) 213. The CPU 211 is connected to the ROM 212 and the RAM 213 via the internal bus 23 such as an address bus and a data bus. The CPU 211 loads various programs stored in the ROM 212 and the storage unit 22 onto the RAM 213. The CPU 211 controls the operation of the store server 20 by executing various programs that have been loaded onto the RAM 213. Note that the configuration of the control unit 21 is not limited to this, and may be, for example, a configuration in which the CPU 211 and the ROM 212, the RAM 213 are directly connected without passing through the internal bus 23.

The storage unit 22 is a storage device such as an HDD (hard disk drive) or an SSD (solid-state drive). Further, the storage unit 22 may be a nonvolatile memory such as a flash memory in which stored information is maintained even when the power is turned off. The storage unit 22 stores a control program 221, an item master 222, an item recognition model 223, a deformation/discoloration determination model 224, and a sales file 225.

The control program 221 is a program for controlling the overall operation of the store server 20. The control program 221 may be provided while being stored in the storage unit 22, or may be provided by being recorded in a non-transitory computer-readable recording medium such as a CD-ROM, a flexible disk (FD), a CD-R, or a DVD (digital versatile disc) in an installable format or an executable format. In addition, the control program 221 may be stored in a computer connected to a network and downloaded therefrom. Further, the control program 221 may be provided or distributed via a network such as the Internet.

The item master 222 is a master file or database that stores item information about each item sold at a store, e.g., the name and price of each item. In one embodiment, the item master 222 stores an item name, a unit price, additional information, and the like in association with an item code. Since the contents of the item master are updated as needed, the store server 20 always updates the contents of the item master 222 to the latest state by, for example, acquiring the latest item master from a host server (not shown) via the communication controller 24. The data structure of the item master 222 will be described in detail later (see FIG. 4).

The item recognition model 223 is a computer model used for uniquely specifying an item from an image captured by the portable terminal 40. The structure of the item recognition model 223 will be described in detail later (see FIG. 5). In addition, the item recognition model 223 may include a code information recognition model that recognizes information (for example, an item code) from code information (for example, a bar code) shown in the image of the item.

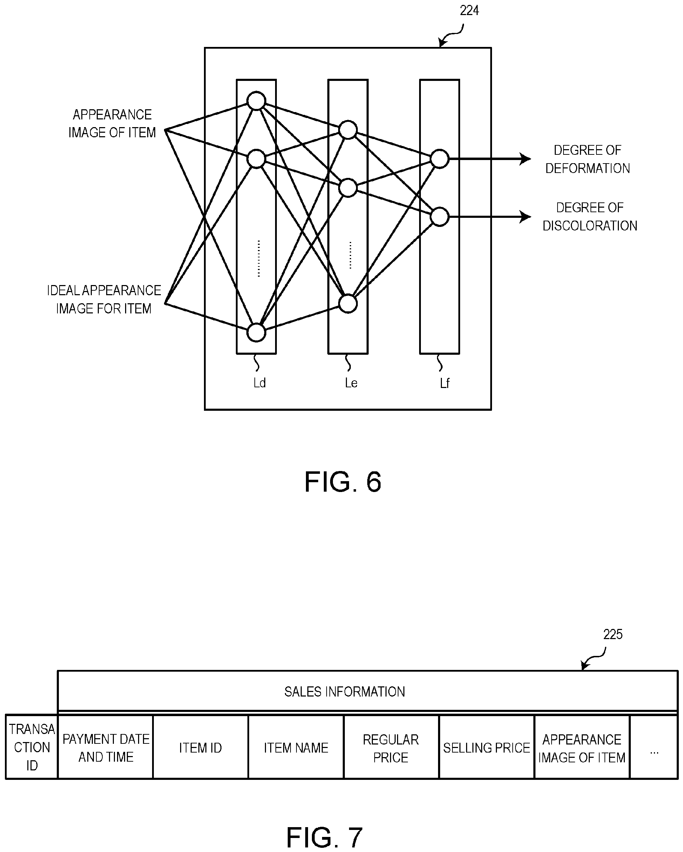

The deformation/discoloration determination model 224 is used for determining the deformation degree or the discoloration degree of the item shown in the captured image. The structure of the deformation/discoloration determination model 224 will be described in detail later (see FIG. 6).

The sales file 225 is a file for storing payment information about the item that the customer has performed the payment process using the portable terminal 40. Each time the payment process is completed, the portable terminal 40 outputs the payment information to the store server 20. Then, the store server 20 stores the payment details acquired from the portable terminal 40 in the sales file 225. The data structure of the sales file 225 will be described in detail later (see FIG. 7).

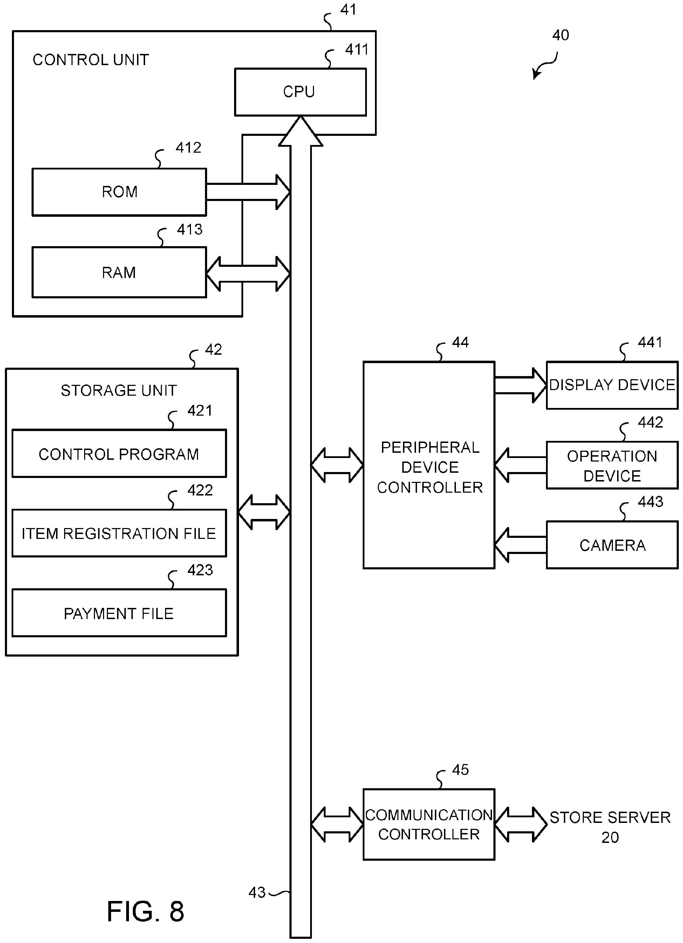

The control unit 21 performs various types of communication with the portable terminal 40 via the communication controller 24. Specifically, the store server 20 acquires from the portable terminal 40, an image obtained by photographing an item. Further, the store server 20 acquires from the portable terminal 40, an item registration file 422 (see FIG. 8) indicating a registration result of the item and a payment file 423 (see FIG. 8) indicating a payment result. Further, the store server 20 outputs the price of the item to the portable terminal 40.

### (Data Structure of Item Master)

The data structure of the item master 222 will be described with reference to FIG. 4. FIG. 4 is a diagram illustrating an example of a data structure of the item master 222 stored in the store server 20.

The item master 222 is a master file in which item information such as an item name and a price of each item to be sold is stored. The item master 222 stores "item classification", "item name", "target item of limited time sale?", "regular price", "expiration date/best-before date", "discountable range", and the like in association with an item ID (e.g., item code) for uniquely specifying an item.

The "item classification" is information indicating a classification name to which the item belongs, for example, a food, a general item, or the like.

The "item name" is the name of the item associated with the item code indicated by the item ID.

The "target item of limited time sale?" is information indicating whether the item is a target item of limited time sale.

The "regular price" is the regular price of the item associated with the item code indicated by the item ID.

The "expiration date/best-before date" is, for example, information indicating an expiration date or best-before date of a particular item such as a foodstuff. Note that the "expiration date/best-before date" may be represented by the code information printed on or attached to the item.

The "discountable range" is information indicating a discountable range of the item associated with the item code indicated by the item ID. The discountable range is, for example, information indicating a discount amount in the case of a limited time sale, a discount amount corresponding to discoloration of the appearance color of an item such as a perishable food, or a discount amount corresponding to a deformation of the appearance of the item.

For example, in the column of the discountable range, when the item is a delicatessen and the item is the target item of the limited time sale, information such as "discount amount of the limited time sale: 5 to 30%" is stored. The discount amount of the limited time sale may be set to be larger as the closing time of the store becomes closer. In this case, the current time and the discount amount of the limited time sale may be stored in association with each other in the column of the discountable range.

In addition, in the column of the discountable range, in the case where the item is a perishable food or the like, information such as "discount amount corresponding to discoloration: 5 to 30%" is stored as a discount amount corresponding to discoloration of the appearance color.

Further, in the column of the discountable range, information such as "discount amount corresponding to the deformation: 5 to 30%" is stored for an item in which there is a possibility that the appearance of the item is deformed.

Depending on the item, a plurality of discount items among "limited time sale", "discoloration of appearance color", and "deformation" are applied.

### (Structure of Item Recognition Model)

The structure of the item recognition model 223 will be described with reference to FIG. 5. FIG. 5 is a diagram illustrating an example of a structure of the item recognition model 223 stored in the store server 20.

The item recognition model 223 is, for example, a computer model trained by a known neural network. The item recognition model 223 is a model in which an enormous number of images of various types of items are learned by performing supervised learning or machine learning in advance. The example illustrated in FIG. 5 is an example in which the item recognition model 223 includes a three-layer neural network having an input layer La, an intermediate layer Lb, and an output layer Lc.

The input layer La has a plurality of nodes, and a plurality of different-feature values extracted from the image of the item are input to the respective nodes. The input layer La outputs, to the intermediate layer Lb, an integrated value obtained by integrating a predetermined coefficient into a plurality of distinct feature values.

The intermediate layer Lb is also referred to as a convolution layer, and has a plurality of nodes, and performs a so-called convolution operation in which the sum of the integrated values calculated by the input layer La is calculated at the respective nodes. Then, the intermediate layer Lb outputs the result of the convolution operation to the output layer Lc.

The output layer Lc calculates the sum of the convolution operation operations inputted from the intermediate layer Lb. The output layer Lc may be determined to correspond to the external images of the items that are input to the item recognition model 223. It should be noted that the output value of the output layer Lc may be a vector amount (for example, a Q-dimensional vector of item A-likeness, item B-likeness, , item Q-likeness) that is an element of a probability representing each itemlikeness. In this case, the number of dimensions is the number of items to be identified.

The value of the coefficient to be integrated to the output of the input layer La and the value of the coefficient to be integrated to the output of the intermediate layer Lb are determined by repeatedly performing supervised training.

Further, the neural network formed by the item recognition model 223 is not limited to a three-layer structure. Further, the item recognition model 223 may be a model in a form other than a neural network, for example, a template in which images obtained by photographing the appearance of a plurality of items from different directions are stored.

### (Structure Of Deformation/Discoloration Determination Model)

The structure of the deformation/discoloration determination model 224 will be described with reference to FIG. 6. FIG. 6 is a diagram illustrating an example of the structure of the deformation/discoloration determination model 224 stored in the store server 20.

The deformation/discoloration determination model 224 is, for example, a computer model trained by a known neural network. The deformation/discoloration determination model 224 is a computer model in which the degree of deformation and the degree of discoloration of the appearance color in a huge number of images of various items are learned by performing supervised learning or machine learning in advance. The example illustrated in FIG. 6 is an example of a three-layer neural network including an input layer Ld, an intermediate layer Le, and an output layer Lf in which the deformation/discoloration determination model 224 is configured.

The input layer Ld has a plurality of nodes, and a plurality of different feature amounts extracted from the appearance image of the item and a plurality of different feature amounts extracted from the ideal appearance image of the item are input to the respective nodes. The input layer Ld outputs, to the intermediate layer Le, an integrated value obtained by integrating a predetermined coefficient into a plurality of distinct feature values.

The intermediate layer Le is also referred to as a convolution layer, and has a plurality of nodes, and performs a so-called convolution operation in which the sum of the integrated values calculated by the input layer Ld is calculated at the respective nodes. Then, the intermediate layer Le outputs the result of the convolution operation to the output layer Lf.

The output layer Lf calculates the sum of the convolution operation operations inputted from the intermediate layer Le. The sum calculated by the output layer Lf indicates the degree of deformation and the degree of color change of the item inputted to the deformation/discoloration determination model 224.

Note that the neural network formed by the deformation/discoloration determination model 224 is not limited to a three-layer structure. In addition, the deformation/discoloration determination model 224 may be in a form other than a neural network, for example, a template in which an image obtained by photographing the appearance of a plurality of items from different directions is stored.

Further, in the present embodiment, the degree of deformation of the item and the degree of color discoloration of the appearance of the item are determined by one model, but the degree of deformation and the degree of color discoloration of the appearance may be determined by another model.

### (Data Structure of Sales File)

The data structure of the sales file 225 will be described with reference to FIG. 7. FIG. 7 is a diagram illustrating an example of a data structure of the sales file 225 stored in the store server 20.

The sales file 225 is generated based on the item registration file 422 (see FIG. 8) output from the portable terminal 40 in association with the transaction ID, the payment file 423 (see FIG. 8), and the appearance image of the item output from the portable terminal 40.

The sales file 225 stores sales information indicating the content of the sales in association with the transaction ID. The sales information includes, for example, a payment date and time, an item ID, an item name, a regular price, a selling price, and an appearance image of the purchased item.

The payment date and time is the date and time when the portable terminal 40 performs the payment. Note that the payment method may be stored together with the payment date and time.

The item ID is an item code of the purchased item.

The item name is the name of the item in association with the item code indicated by the item ID.

The regular price is the regular price of the item associated with the item code indicated by the item ID.

The selling price is the selling price of the corresponding item. The selling price is the regular price of the item minus the discount amount.

The appearance image of the item is an image of the item captured by the camera 443 of the portable terminal 40. The appearance image of the item is stored as evidence indicating that the selling price of the item is reasonable.

Note that the information stored in the sales file 225 is not limited to the information illustrated in FIG. 7. For example, if the customer has registered as a member, the customer ID may be stored in the sales file 225.

### (Hardware Configuration of Portable Terminal)

A hardware configuration of the portable terminal 40 will be described with reference to FIG. 8. FIG. 8 is a hardware block diagram illustrating an example of a hardware configuration of the portable terminal 40 included in the selling price display system 10.

The portable terminal 40 has a configuration in which a control unit 41, a storage unit 42, a peripheral device controller 44, and a communication controller 45 are connected to each other by an internal bus 43.

The control unit 41 controls the overall operation of the portable terminal 40. The control unit 41 includes a processor such as a CPU 411, a ROM 412, and a RAM 413. The CPU 411 is connected to the ROM 412 and the RAM 413 via the internal bus 43 such as an address bus and a data bus. The CPU 411 loads various programs stored in the ROM 412 or the storage unit 42 onto the RAM 413. The CPU 411 controls the operation of the portable terminal 40 by executing the programs loaded onto the RAM 413. Note that the configuration of the control unit 41 is not limited to this, and may be, for example, a configuration in which the CPU 411 and the ROM 412, the RAM 413 are directly connected without passing through the internal bus 43.

The storage unit 42 is a storage device such as an HDD or an SSD. Further, the storage unit 42 may be a nonvolatile memory such as a flash memory in which stored information is maintained even when the power is turned off. The storage unit 42 stores a control program 421, the item registration file 422, and the payment file 423.

The control program 421 is a program for controlling the overall operation of the portable terminal 40. The control program 421 may be stored in the storage unit 42 in advance, or may be provided through a non-transitory computer-readable recording medium such as a CD-ROM, a flexible disk (FD), a CD-R, or a DVD in an installable format or an executable format. In addition, the control program 421 may be stored in a computer connected to a network and downloaded therefrom. Further, the control program 421 may be provided or distributed via a network such as the Internet.

The item registration file 422 is a file in which registered item information (for example, an item name, a number, a unit price, a price, and the like) is stored in association with a transaction code (hereinafter, referred to as a transaction ID) for specifying one transaction.

The payment file 423 is a file that stores payment information (for example, payment date and time, payment methods, payment contents, payment amount, and the like) related to the transaction in association with the transaction ID.

The control unit 41 is connected to a display device 441, an operation device 442, and the camera 443 that input and output various types of information via the peripheral device controller 44.

The display device 441 is, for example, a display including an LCD (liquid crystal panel) or an organic EL panel. The display device 441 displays various pieces of image information, text information, and the like related to the transaction.

The operation device 442 is, for example, a touch panel stacked on the display device 441. The operation device 442 acquires operation information of the operator with respect to the portable terminal 40, and outputs the operation information to the control unit 41.

The camera 443 has imaging devices such as CCD (charge coupled device) and CMOS (complementary metal oxide semiconductor) to image the direction in which it is directed. The camera 443 is installed on the rear side of the display device 441 of the portable terminal 40.

The control unit 41 performs various types of communication with the store server 20 via the communication controller 45. Specifically, the portable terminal 40 outputs an image of the appearance of the item captured by the camera 443 to the store server 20. Further, the portable terminal 40 acquires the price of the item appearing in the image from the store server 20. Further, the portable terminal 40 outputs the item registration file 422 and the payment file 423 to the store server 20.

### (Example of Information Displayed on Portable Terminal)

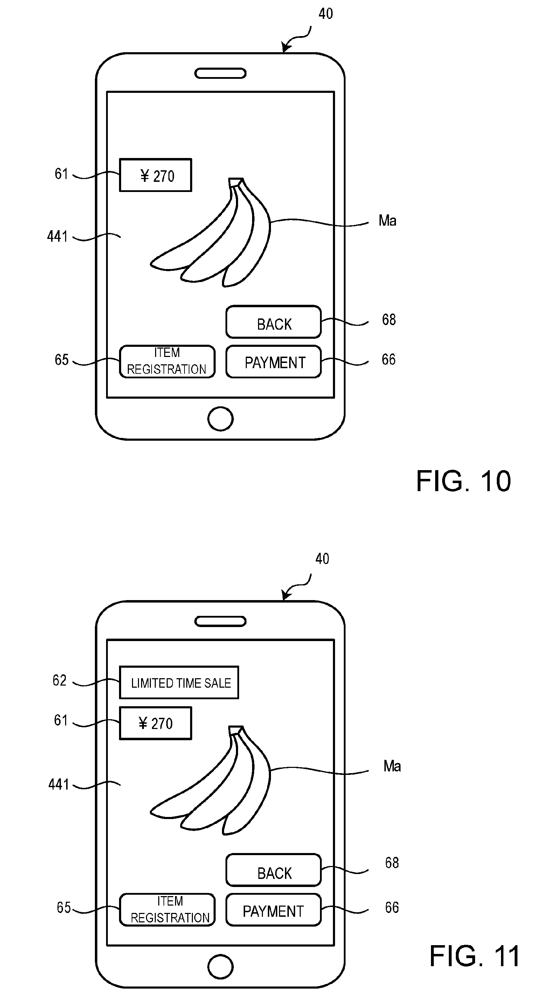

An example of information displayed on the display device 441 of the portable terminal 40 will be described with reference to FIG. 9 and FIG. 10. FIG. 9 is a diagram illustrating an operation for a customer to use the portable terminal 40 to capture an image of an item. FIG. 10 is a diagram illustrating a first example of a screen in which a price of the photographed item is displayed.

When there is a desired item Ma in the store, the customer removes the portable terminal 40 from the shopping cart 15, and turns the camera 443 toward the desired item Ma, and taps an activation button (not shown) of the camera 443. When the activation button of the camera 443 is tapped, the portable terminal 40 displays the video captured by the camera 443 on the display device 441.

Subsequently, the customer taps a non-illustrated shooting button displayed on the display device 441. When the shooting button is tapped, the portable terminal 40 captures an image of the item Ma displayed on the display device 441 at that time.

The portable terminal 40 outputs images of the captured item Ma to the store server 20. Upon acquiring images of the item Ma from the portable terminal 40, the store server 20 performs an item recognizing process of specifying the item Ma. When the item Ma is specified, the store server 20 reads out the price of the item from the item master 222. Then, the store server 20 outputs the price of the item Ma to the portable terminal 40.

When the price of the item Ma is acquired from the store server 20, the portable terminal 40 displays the price of the item Ma on the display device 441 so as to be superimposed on the images of the item Ma.

FIG. 10 shows an exemplary screen in which the price of the item Ma is displayed on the portable terminal 40.

At this time, the display device 441 displays a price display 61, a registration button 65, a payment button 66, and a back button 68 by superimposing the images on the item Ma.

The price display 61 is an image or text indicating the price of the item Ma acquired from the store server 20.

The registration button 65 is a user interface that can be tapped for registering the item Ma displayed on the screen. When the registration button 65 is tapped, the portable terminal 40 registers the item Ma in the item registration file 422 (see FIG. 8).

The payment button 66 is a user interface component to be tapped when payment of the registered item is performed. When the payment button 66 is tapped, the portable terminal 40 performs a payment process related to the registered item of the item registration file 422.

The back button 68 is a user interface that is tapped when the user does not wish to buy the item Ma. When the back button 68 is tapped, the portable terminal 40 transitions to a state (state in FIG. 9) in which the video captured by the camera 443 is displayed on the display device 441.

### (Examples of Price of Item Displayed on Portable Terminal)

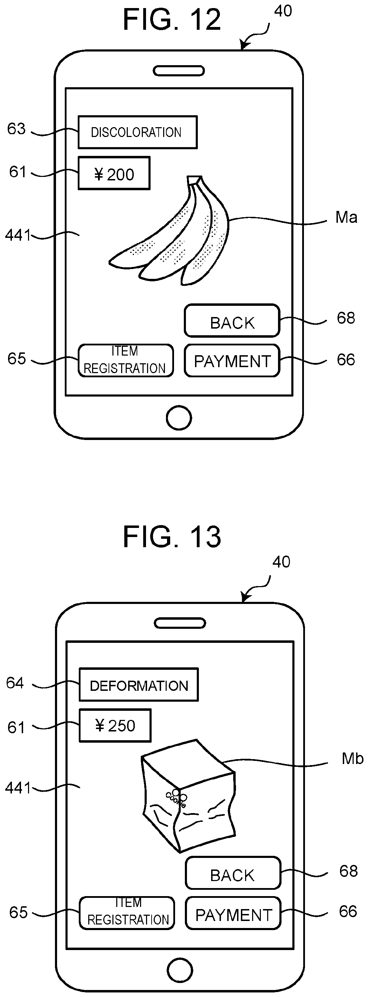

An example of a price of an item displayed on the display device 441 of the portable terminal 40 will be described with reference to FIGS. 11 to 13. FIG. 11 is a diagram illustrating a second example of a screen in which a price of a photographed item is displayed on the portable terminal 40. FIG. 12 is a diagram illustrating a third example of a screen in which a price of a photographed item is displayed on the portable terminal 40. FIG. 13 is a diagram illustrating a fourth example of a screen in which a price of a photographed item is displayed on the portable terminal 40.

FIG. 11 shows an exemplary screen in which the price of the item Ma reflecting the discount due to the limited time sale is displayed on the portable terminal 40.

At this time, the display device 441 displays the price display 61, a limited time sale display 62, the registration button 65, the payment button 66, and the back button 68, superimposed on the item Ma image.

The price display 61, the registration button 65, the payment button 66, and the back button 68 are arranged as illustrated in FIG. 10.

The limited time sale display 62 is a display indicating that the price displayed in the price display 61 is a price reflecting a discount caused by the limited time sale.

FIG. 12 shows an exemplary screen in which the price of the item Ma reflecting the discoloration corresponding to the discoloration degree of the item is displayed on the portable terminal 40.

At this time, the display device 441 displays the price display 61, the discoloration display 63, the registration button 65, the payment button 66, and the back button 68 by superimposing them on the item Ma image.

The price display 61, the registration button 65, the payment button 66, and the back button 68 are arranged as illustrated in FIG. 10.

The discoloration display 63 is an image or text indicating that the price displayed in the price display 61 is a price reflecting a discount caused by discoloration of the item.

FIG. 13 shows an exemplary screen in which the price of the item Mb reflecting the discount corresponding to the deformation of the item is displayed on the portable terminal 40.

At this time, the display device 441 displays the price display 61, the deformation display 64, the registration button 65, the payment button 66, and the back button 68, superimposed on the item Mb image.

The price display 61, the registration button 65, the payment button 66, and the back button 68 are arranged as illustrated in FIG. 10.

The deformation display 64 is an image or text indicating that the price displayed in the price display 61 is a price reflecting a discount caused by the deformation of the item.

Depending on the state of the item, a plurality of discounts may be applied, such as discounts caused by time sale, discounts caused by discoloration, and discounts caused by deformation. In such a case, the display device 441 of the portable terminal 40 displays a plurality of corresponding images among the limited time sale display 62, the color change display 63, and the deformation display 64.

### (Functional Structure of Selling Price Display System)

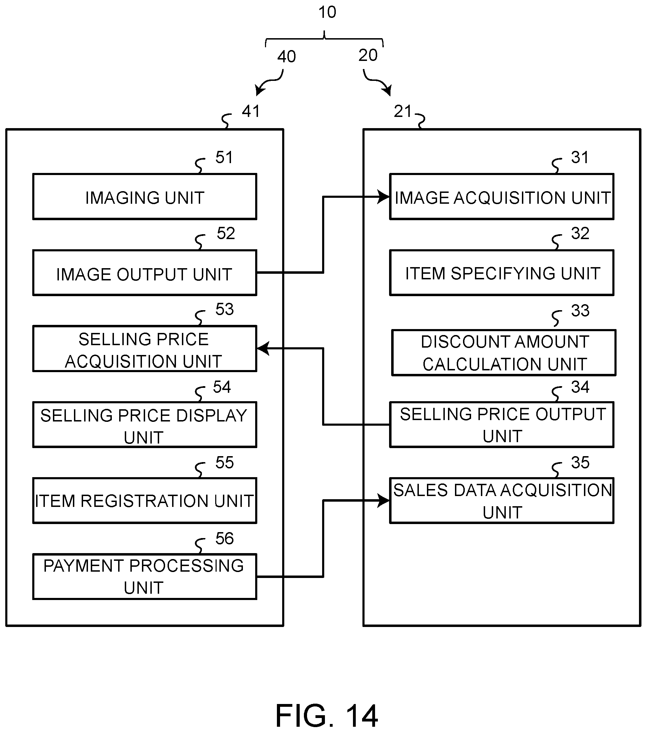

A functional configuration of the selling price display system 10 will be described with reference to FIG. 14. FIG. 14 is a functional block diagram illustrating an example of a functional configuration of the selling price display system 10.

The control unit 21 of the store server 20 loads and executes the control program 221, thereby performing the functions of an image acquisition unit 31, an item specifying unit 32, a discount amount calculation unit 33, a selling price output unit 34, and the sales data acquisition unit 35 illustrated in FIG. 14. Note that some or all of these functional units may be realized by dedicated hardware.

The image acquisition unit 31 acquires an image of an item captured by the portable terminal 40.

The item specifying unit 32 uniquely specifies the item ID (for example, the item code) of the item appearing in the image acquired by the image acquisition unit 31.

The discount amount calculation unit 33 calculates a discount amount from the regular price of the item based on the appearance shape or the appearance color of the item. More specifically, the discount amount calculation unit 33 calculates the discount amount from the regular price of the item related to the limited time sale on the basis of the time when the image of the item is acquired from the portable terminal 40 and the closing time of the store. Further, the discount amount calculation unit 33 calculates the discount amount from the regular price of the item on the basis of the degree of difference between the appearance shape or the appearance color of the image acquired by the image acquisition unit 31 and the image including the appearance of the item in the normal state stored therein. It is preferable that the discount amount calculation unit 33 sets the discount amount of the item related to the limited time sale to be larger as the discount amount is closer to the closing time of the store. In addition, it is desirable that the discount amount calculation unit 33 sets the discount amount to be larger as the degree of discoloration of the item is larger or the degree of deformation of the item is larger.

The selling price output unit 34 outputs the selling price obtained by subtracting the discount amount from the regular price to the portable terminal 40.

The sales data acquisition unit 35 acquires the item registration file 422 and the payment file 423 from the portable terminal 40.

Further, the control unit 41 of the portable terminal 40 loads and executes the control program 421, thereby performing the functions of the imaging unit 51, the image output unit 52, the selling price acquisition unit 53, the selling price presenting unit 54, the item registration unit 55, and the payment processing unit 56 illustrated in FIG. 14. Note that some or all of these functional units may be realized by dedicated hardware.

The imaging unit 51 controls the camera 443 to capture an image including the appearance of the item.

The image output unit 52 outputs the image captured by the imaging unit 51 to the store server 20.

The selling price acquisition unit 53 acquires from the store server 20, the selling price of the item appearing in the image captured by the imaging unit 51.

The selling price display unit 54 presents the selling price of the item by superimposing it on the image of the item.

The item registration unit 55 performs an item registration process for registering the selected item in the item registration file 422.

The payment processing unit 56 performs a payment process of paying a price for the item registered in the item registration file 422. When the payment process is completed, the payment processing unit 56 generates a payment file 423 indicating the payment result.

### (Flow of Processing Performed by Selling Price Display System)

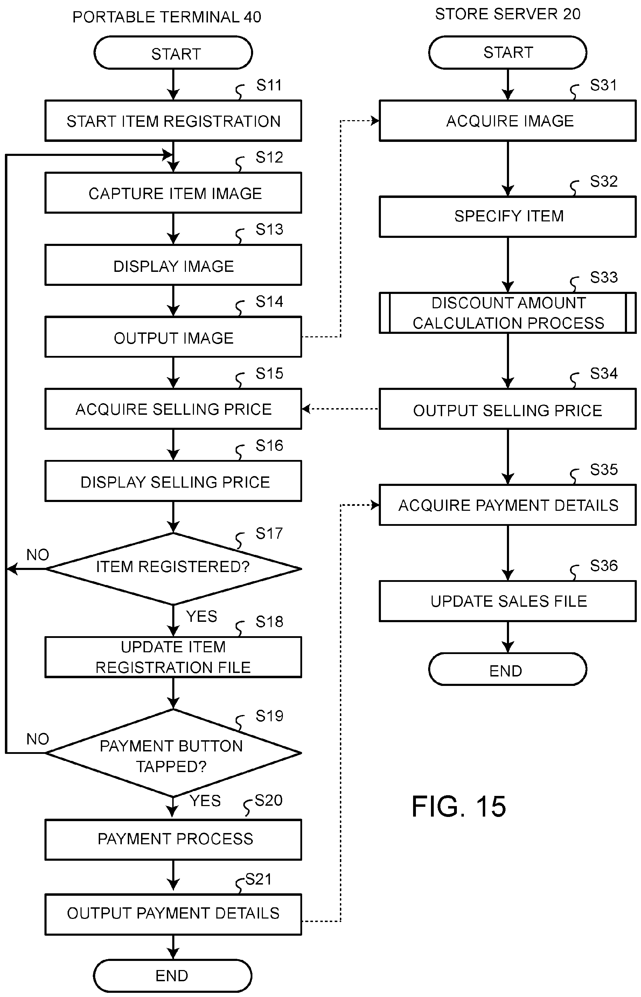

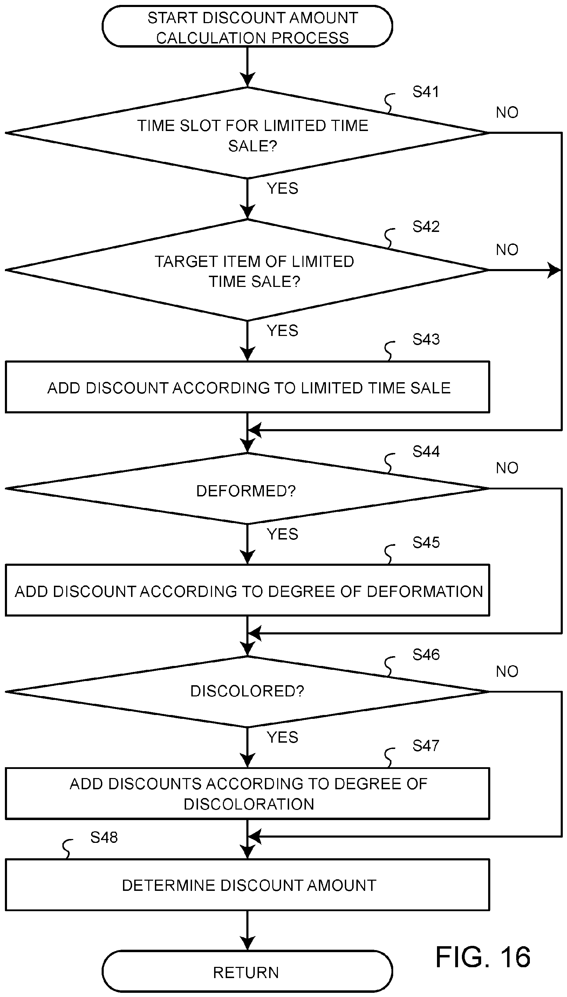

A flow of a process performed by the selling price display system 10 will be described with reference to FIG. 15 and FIG. 16. FIG. 15 is a flowchart illustrating an example of a flow of a process performed by the selling price display system 10. FIG. 16 is a flowchart illustrating an example of a flow of a discount amount calculation process.

First, a flow of a process performed by the portable terminal 40 will be described.

A customer who shops at a store operates the portable terminal 40 to select the start of item registration from a main menu (not shown). As a result, the portable terminal 40 is ready to register an item (step S11).

The imaging unit 51 activates the camera 443 to capture an image of an item (step S12).

The imaging unit 51 controls the display device 441 to display the image captured by the camera 443 (step S13).

The imaging unit 51 detects that the shooting button displayed on the display device 441 has been tapped, and captures an image of the item Ma displayed on the display device 441 at that time. Then, the image output unit 52 controls the communication controller 45 to output the image captured by the imaging unit 51 to the store server 20 (step S14).

The selling price acquisition unit 53 acquires the selling price of the item Ma appearing in the images captured by the imaging unit 51 from the store server 20 (step S15).

The selling price display unit 54 controls the display device 441 to display the selling price of the item Ma acquired from the store server 20 by superimposing it on the image of the item Ma (step S16).

The item registration unit 55 determines whether the item Ma has been registered (step S17). When it is determined that the item Ma has been registered (step S 17:Yes), the process proceeds to step S18. On the other hand, if it is not determined that the item Ma has been registered (step S17:No), the process returns to step S12. Note that the item registration unit 55 determines that the item Ma is registered on condition that the registration button 65 displayed on the display device 441 is tapped.

In the step S17, when it is determined that the item Ma has been registered, the item registration unit 55 adds and registers the information related to the item Ma in the item registration file 422, thereby updating the item registration file 422 (step S 18).

Subsequently, the payment processing unit 56 determines whether the payment button 66 displayed on the display device 441 has been tapped (step S19). If it is determined that the payment button 66 has been tapped (step S19:Yes), the process proceeds to step S20. On the other hand, if it is not determined that the payment button 66 has been tapped (step S19:No), the process returns to step S12.

When it is determined in step S19 that the payment button 66 has been tapped, the payment processing unit 56 performs the payment process related to the content registered in the item registration file 422 (step S20). The payment method is selected by the customer operating the portable terminal 40.

The payment processing unit 56 outputs the payment file 423 indicating the payment result to the store server 20 (step S21). At this time, the item registration file 422 is also output to the store server 20. Thereafter, the portable terminal 40 ends the processing.

Next, a flow of the process performed by the store server 20 will be described.

The image acquisition unit 31 acquires the image of the item Ma captured by the portable terminal 40 (step S31).

The item specifying unit 32 uniquely specifies the item code of the item Ma appearing in the image acquired by the image acquisition unit 31 (step S32).

The discount amount calculation unit 33 performs a discount amount calculation process of calculating the discount amount from the regular price of the item Ma appearing in the images (step S33). A detailed flow of the discount amount calculation process performed in the step S33 will be described later (see FIG. 16).

The selling price output unit 34 controls the communication controller 24 to output the selling price obtained by subtracting the discount amount from the regular price to the portable terminal 40 (step S34).

The sales data acquisition unit 35 acquires information (for example, the item registration file 422 and the payment file 423) indicating the payment information from the portable terminal 40 (step S35).

The sales data acquisition unit 355 updates the sales file 225 based on the information indicating the payment details acquired in the step S35 (step S36). Thereafter, the store server 20 ends the process.

Next, with reference to FIG. 16, the flow of the discount amount calculation process performed by the store server 20 in the step S33 of FIG. 15 will be described.

The discount amount calculation unit 33 determines whether the time at which the store server 20 acquires the image of the item Ma captured by the portable terminal 40 is within the time slot of the limited time sale in the store (step S41). If it is determined that it is within the time slot of the limited time sale (step S41:Yes), the process proceeds to step S42. On the other hand, if it is not determined that it is within the time slot of the limited time sale (step S41:No), the process proceeds to step S44. Note that the discount amount calculation unit 33 may determine whether the time at which the portable terminal 40 outputs the image of the item Ma is within the time slot of the limited time sale in the store.

In the step S41, when it is determined that the time slot is within the time slot of the limited time sale, the discount amount calculation unit 33 determines whether the specified item Ma is a target item of the limited time sale (step S42). When it is determined that the item Ma is a target item of the limited time sale (step S42:Yes), the process proceeds to step S43. On the other hand, if it is not determined that the item Ma is a target item of the limited time sale (step S42:No), the process proceeds to step S44. The discount amount calculation unit 33 refers to the item master 222 to determine whether the item Ma is a target item for limited time sale.

In the step S42, when it is determined that the item Ma is a target item of the limited time sale, the discount amount calculation unit 33 adds the discount according to the limited time sale registered in association with the item Ma in the item master 222 (step S43). Note that the discount amount based on the limited time sale may be set higher as the discount amount is closer to the closing time of the store.

Next, the discount amount calculation unit 33 analyzes the image of the item Ma to determine whether the item Ma is deformed (step S44). When it is determined that the item Ma is deformed (step S44:Yes), the process proceeds to step S45. On the other hand, if it is not determined that the item Ma is deformed (step S44:No), the process proceeds to step S46. The discount amount calculation unit 33 determines whether the item Ma is deformed by using the deformation/discoloration determination model 224.

In the step S44, when it is determined that the item Ma is deformed, the discount amount calculation unit 33 adds a discount according to the degree of the deformation registered in association with the item Ma in the item master 222 (step S45). At this time, in the step S43, when the discount due to the limited time sale is added, the discount due to the limited time sale and the discount due to the deformation are added.

Next, the discount amount calculation unit 33 analyzes the image of the item Ma to determine whether the item Ma is discolored (step S46). If it is determined that the item Ma is discolored (step S46:Yes), the process proceeds to step S47. On the other hand, if it is not determined that t the item Ma is discolored (step S46:No), the process proceeds to step S48. Note that the discount amount calculation unit 33 determines whether the item Ma is discolored by using the deformation/discoloration determination model 224.

In the step S46, when it is determined that the item Ma is discolored, the discount amount calculation unit 33 adds the discount amount corresponding to the degree of discoloration registered in association with the item Ma in the item master 222 (step S47). At this time, if the discount due to the limited time sale and the discount due to the deformation have already been added, the discount due to the discoloration is further added.

The discount amount calculation unit 33 determines the discount amount of the item Ma by adding the discount amount corresponding to the limited time sale, the discount amount corresponding to the degree of the deformation, and the discount amount corresponding to the discoloration (step S48). Thereafter, S34 returns to the steps of FIG. 15. When all of the discount corresponding to the limited time sale, the discount corresponding to the degree of the deformation, and the discount corresponding to the discoloration are applied, the discount amount may increase, and therefore it is desirable to set the maximum discount amount (for example, 60% discount of the item price is set to the maximum discount amount) in advance.

### (Effect)

According to the selling price display system 10 described above, it is possible to present a selling price corresponding to the state of the item that the customer desires to purchase. Further, since it is not necessary for the store clerk to attach a discount label indicating the discount amount to each item, the workload of the store clerk can be reduced.

Further, since it is not necessary to attach a label or the like indicating the discount amount of the item in the limited time sale to each item, it is possible to reduce the amount of work performed by the store clerk. Further, the customer can easily understand why the discount amount is set through the images or text displayed on the portable terminal 40.

Further, according to the selling price display system 10, it is possible to easily calculate a discount amount corresponding to discoloration or deformation of an item using the deformation/discoloration determination model 224.

Further, according to the store server 20, it is possible to set the selling price according to the state of the item that the customer desires to purchase.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims are intended to cover such forms or modifications as would fall within the scope of the disclosure.

## Claims

1. A system for setting and displaying a selling price of an item sold at a store, comprising:
a store server (20) that stores item information about an item; and
a portable terminal (40) connectable to the store server and including:
a camera (443),
a display,
a communication controller (45), and
a processor configured to:
control the camera to capture an image,
control the display to display the captured image, and
control the communication controller to transmit the captured image to the store server, and upon receipt of a selling price of an item from the store server, control the display to display the selling price over the captured image, wherein
the store server is configured to, upon receipt of an image from the portable terminal:
execute image recognition on the received image and identify an item shown in the image,
input the image to a machine-learning model that has been trained to recognize a discoloration state or a deformation state of the item shown in the image,
set a selling price for the identified item based on the discoloration state or the deformation state of the item, and
transmit the selling price to the portable terminal.

2. The system according to claim 1, wherein
the item information indicates a regular selling price of the item, and
the store server is configured to:
determine a discount amount of the identified item based on the discoloration state or the deformation state, and
calculate the selling price by subtracting the discount amount from the regular selling price of the identified item.

3. The system according to claim 2, wherein the store server determines the discount amount that corresponds to a degree of discoloration or a degree of deformation of the identified item.

4. The system according to claim 2 or 3, wherein the store server determines the discount amount further based on a time when the image was captured by the portable terminal and a closing time of the store.

5. The system according to any one of claims 2 to 4, wherein the store server determines the discount amount further based on an expiration date of the identified item.

6. The system according to any one of claims 2 to 5, wherein
the store server is configured to transmit information indicating that a discount is applied because of discoloration or deformation of the identified item, and
the processor of the portable terminal is configured to control the display to display the information transmitted from the store server adjacent to the selling price.

7. The system according to any one of claims 1 to 6, wherein
the system is a point-of-sale (POS) system for registering an item for purchase at the store, and
the processor is configured to control the display to display a first button for registering the item over the captured image.

8. The system according to any one of claims 1 to 7, wherein the portable terminal is attachable to a shopping cart, more preferably attachable to a handle of the shopping cart.

9. The system according to any one of claims 1 to 8, wherein the processor is configured to:
control the display to display a second button for performing a payment process on the registered item, and
control the communication controller to transmit, to the store server, information indicating the item on which the payment process was performed.

10. A store server (20) for the system of any one of claims 1 to 9 and for setting and displaying a selling price of an item sold at a store on a portable terminal, the store server comprising:
a communication controller (24) connectable to the portable terminal;
a memory (22) that stores item information about an item; and
a processor configured to:
upon receipt of an image captured by the portable terminal via the communication controller, execute image recognition on the image and identify an item shown in the image,
input the image to a machine-learning model that has been trained to recognize a discoloration state or a deformation state of the item shown in the image,
set a selling price for the identified item based on the discoloration state or the deformation state of the item, and
control the communication controller to transmit the selling price to the portable terminal such that the selling price is displayed over the captured image on the portable terminal.

11. The store server according to claim 10, wherein
the item information indicates a regular selling price of the item, and
the processor is configured to:
determine a discount amount of the identified item based on based on the discoloration state or the deformation state, and
calculate the selling price by subtracting the determined discount amount from the regular selling price of the identified item,
more preferably, wherein the processor determines the discount amount that corresponds to a degree of discoloration or a degree of deformation of the identified item, more preferably the processor determines the discount amount further based on a time when the image was captured by the portable terminal and a closing time of the store, and/or an expiration date of the identified item.

12. The store server according to claim 10 or 11, wherein the processor is configured to control the communication controller to transmit, to the portable terminal, information indicating that a discount is applied because of discoloration or deformation of the identified item, such that the information is displayed adjacent to the selling price on the portable terminal.

13. The store server according to any one of claims 10 to 12, wherein the processor is configured to store, in the memory, a sales file that stores information about the item on which a payment process was performed through the portable terminal.

14. A non-transitory computer readable medium storing a program causing a computer to execute a method for setting and displaying a selling price of an item sold at a store on a portable terminal, the method comprising:
capturing an image using a camera of the portable terminal;
displaying the captured image on the portable terminal;
transmitting the captured image to a store server,
executing image recognition on the image transmitted to and received by the store server and identifying an item shown in the image;
inputting the image to a machine-learning model that has been trained to recognize a discoloration state or a deformation state of the item shown in the image;
setting a selling price for the identified item based on the discoloration state or the deformation state of the item;
transmitting the selling price from the store server to the portable terminal; and
displaying the selling price over the captured image.

15. The computer readable medium according to claim 14, wherein determining further includes:
determining a discount amount of the identified item based on the discoloration state or the deformation state, and
calculating the selling price by subtracting the determined discount amount from a regular selling price of the identified item, preferably wherein the discount amount is determined further based on a time when the image was captured by the portable terminal and a closing time of the store.
